# EUROPÄISCHE PATENTSCHRIFT

(11) **EP 3 833 161 B1**
(45) Veröffentlichungstag und Bekanntmachung des Hinweises auf die Patenterteilung: **20.03.2024**
(21) Anmeldenummer: 19214113.3
(22) Anmeldetag: 06.12.2019
(51) Int. Cl.: H05B 45/12, H05B 45/44

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(43) Veröffentlichungstag der Anmeldung: 09.06.2021
(73) Patentinhaber: ZKW Group GmbH, 3250 Wieselburg (AT); Newsight Imaging, 7414002 Ness Ziona (IL)
(72) Erfinder: Hartmann, Peter, 3392 Schönbühel-Aggsbach (AT); Artmann, Matthäus, 3370 Ybbs an der Donau (AT); Assoolin, Eli, 7414002 Ness Ziona (IL); Lev, Erez, 7414002 Ness Ziona (IL)
(74) Vertreter: Patentanwaltskanzlei Matschnig & Forsthuber OG

(56) Entgegenhaltungen:
- DE-A1-102008 032 345
- DE-A1-102013 001 274
- US-B2- 10 005 384

## Beschreibung

Die Erfindung betrifft eine Beleuchtungsvorrichtung für einen Kraftfahrzeugscheinwerfer nach Anspruch 1.

Außerdem betrifft die Erfindung einen Kraftfahrzeugscheinwerfer mit mindestens einer erfindungsgemäßen Beleuchtungsvorrichtung.

ADB-Systeme beziehungsweise ADB-Kraftfahrzeugscheinwerfer umfassen gewöhnlich eine Umgebungsaufnahmeeinrichtung, wie z.B. eine Kamera oder ein Kamera-System, und ein Kraftfahrzeugscheinwerfer-System. Die - wohl bekannte - Funktionsweise eines ADB-Systems besteht darin, dass das Kraftfahrzeugscheinwerfer-System in Abhängigkeit von Informationen, die die Umgebungsaufnahmeeinrichtung dem Kraftfahrzeugscheinwerfer-System zur Verfügung stellt, die Kraftfahrzeugscheinwerfer steuert und beispielsweise entsprechende Bereiche der mittels der Kraftfahrzeugscheinwerfer erzeugten Lichtverteilung ausblendet oder dimmt. Dimmen heißt den abgegebenen Lichtstrom in dem Bereich reduzieren.

Unter ADB-Systemen kann zwischen ADB-Systemen eines dynamischen Typs und ADB-Systemen eines Matrixtyps unterschieden werden (siehe US 2016/0368414 A1, [0045]). Bei den ADB-Systemen des dynamischen Typs kann ein Ausblend-Bereich ("dark zone") in der erzeugten Lichtverteilung unter Verwendung eines Schwenkantriebs geschaffen werden. Bei den ADB-Systemen des Matrixtyps wird ein Ausblend-Bereich meistens mittels Ausschaltens/Abblendens entsprechender Lichtquelle erzeugt. Die vorgenannte Beleuchtungsvorrichtung für einen Kraftfahrzeugscheinwerfer ist vorzugsweise eine Vorrichtung des Matrixtyps.

Insbesondere aus Sicht der Kraftfahrzeugscheinwerfer-Hersteller ist es bei ADB-Systemen nachteilhaft, dass die Umgebungsaufnahmeeinrichtung von dem Kraftfahrzeugscheinwerfer-System baulich getrennt ist. Üblicherweise stammen die vorgenannten wesentlichen Teile eines ADB-Systems von unterschiedlichen Herstellern. Typischerweise weist ein Kraftfahrzeugscheinwerfer-System eine Schnittstelle auf, die zum Einspeisen von seitens der Umgebungsaufnahmeeinrichtung zur Verfügung gestellten Informationen vorgesehen ist. Das führt z.B. dazu, dass ein Kraftfahrzeugscheinwerfer-Hersteller beim Einstellen von Abblendszenarien auf die Informationen angewiesen ist, die von einer extern zur Verfügung gestellten, beispielsweise gekauften Umgebungsaufnahmeeinrichtung geliefert werden. Die genannte Information ist oft in Form von so genannten Objektlisten vorhanden. Solche Objektlisten erzeugt die Umgebungsaufnahmeeinrichtung, indem sie beispielsweise mit dem vorgenannten Kamera-System Bilder in dem Sichtfeld (Engl. "Field of View") des Kamera-Systems aufnimmt, wobei das Sichtfeld vorzugsweise an den relevanten Bereich vor dem Kraftfahrzeug angepasst ist, und diese Bilder mithilfe einer in der Umgebungsaufnahmeeinrichtung vorhandenen Recheneinheit auswertet. Dabei wird unter der Anpassung des Sichtfeldes an den relevanten Bereich verstanden, dass das Sichtfeld einen Öffnungswinkel aufweist, der zur Erfassung zumindest der vor dem Kraftfahrzeug befindlichen Fahrbahn ausreichend groß ist. Als Output liefert die Recheneinheit die vorgenannten Objektlisten. Als Objekte in solchen Listen können beispielsweise Fahrzeuge, wie LKWs, PKWs, Motorräder usw. vorkommen. Jedem einzelnen Objekt werden typischerweise Koordinaten in dem Koordinatensystem des Kamera-Systems zugeordnet. Dieses Ursprungs-Koordinatensystem hat somit oft den Ursprung in etwa an der hinteren Seite des Rückspiegels in dem Innenraum des Kraftfahrzeugs, da dort üblicherweise eine Kamera des Kamera-Systems angeordnet ist.

Wenn nun das Steuersystem als Input eine solche Objektliste bekommt, rechnet es entsprechend der Objektliste ein zu erzeugendes Lichtbild aus. Dabei müssen zunächst die Koordinaten der Objekte in ein Koordinatensystem der Kraftfahrzeugscheinwerfer umgerechnet werden. Dies erfordert relativ hohe Rechenleistung, verursacht relevante Zeitverzögerung und ist eine mögliche Fehlerquelle. Außerdem kommt es oft zu zusätzlichen Fehlern, die durch Fehlerkennung der Objekte seitens der Recheneinheit der Umgebungsaufnahmeeinrichtung entstehen. Ein nicht selten vorkommender Fehler dieser Art ist eine Verwechslung zwischen einem vorausfahrenden LKW und zwei Motorrädern - die Recheneinheit erkennt anhand einer ersten Aufnahme Rückleuchten eines LKW, wobei bei einer zweiten beispielsweise darauffolgenden Aufnahme dieselben Rückleuchten als zwei Motorräder interpretiert werden. Da das Steuersystem des Kraftfahrzeugscheinwerfer-Systems diese Daten nicht beeinflussen kann, kann ein periodisches Auf- und Abblenden eines Bereiches zwischen den Rückleuchten entstehen, je nachdem ob die Rückleuchten in der Objektliste den zwei Motorrädern (Aufleuchten) oder dem LKW (Ausblenden) zugeordnet sind. Dies kann unter Umständen zu einer Blendung des Fahrers aufgrund einer Lichtreflexion führen.

Die DE 10 2008 032345 A1 und die DE 10 2013 001274 A1 zeigen Beleuchtungsvorrichtungen aus dem Stand der Technik.

Die Aufgabe der vorliegenden Erfindung kann darin gesehen werden, eine autarke ADB-Beleuchtungsvorrichtung zu schaffen, die nicht auf Daten externer Bildaufnahme-Einrichtungen angewiesen ist und bei der die Latenzzeiten reduziert und gleichzeitig die Genauigkeit des Abblendens erhöht wird.

Die Aufgabe wird mit dem Kennzeichen des Anspruchs 1 gelöst.

Bei einer bevorzugten Ausführungsform kann mit Vorteil vorgesehen sein, dass das Sensorpixel-Array zumindest eine, vorzugsweise mehrere, beispielsweise zwei, drei oder vier, Sensorpixel-Zeile(n) und eine Vielzahl, vorzugsweise mehr als 1000, insbesondere 1024 oder 2048 von Sensorpixel-Spalten aufweist, wobei die Sensorpixel-Zeile(n) vorzugsweise horizontal angeordnet sind.

Es kann zweckmäßig sein, wenn das Leuchtpixel-Array zumindest eine, vorzugsweise mehrere Leuchtpixel-Zeile(n) und eine Vielzahl von Leuchtpixel-Spalten aufweist, wobei die Leuchtpixel-Zeile(n) vorzugsweise horizontal angeordnet sind.

Es kann vorgesehen sein, dass der Grundträger einen Kühlkörper aufweist, an dem der Lichtsensor, das Leuchtmittel und die Steuereinheit angeordnet sind.

Es ist vorgesehen, dass der Grundträger eine erste Leiterplatte und eine zweite Leiterplatte umfasst, wobei das Leuchtmittel auf der ersten Leiterplatte angebracht ist und der Lichtsensor auf der zweiten Leiterplatte angebracht ist, wobei die erste Leiterplatte mit der zweiten Leiterplatte elektrisch und mechanisch verbunden ist.

Ein vorteilhafter Aufbau kann jedoch auch ein Grundträger sein, welcher aus mehreren (>= 2) Einheiten derartig nach bekannten Methoden form- oder stoffschlüssig gefügt ist, dass er in mechanischer und thermischer Hinsicht einem einstückigen Grundträger annähernd gleichwertig ist, insbesondere bezüglich Maßhaltigkeit unter wechselnden Temperaturbedingungen (z.B.: -40°C bis 125°C) und bezüglich der Bildung einer Referenzebene für optische Komponenten.

Es ist vorgesehen, dass der Lichtsensor und das Leuchtmittel gemeinsam in einer Ebene angeordnet sind, wobei die Ebene vorzugsweise im Wesentlichen senkrecht zur Hauptabstrahlrichtung der Beleuchtungsvorrichtung angeordnet ist.

Bei einer besonders bevorzugten Ausführungsform kann vorgesehen sein, dass zumindest ein, insbesondere jedes Sensorpixel als zumindest ein photoelektrisches Wandlerelement, insbesondere als zumindest eine Photodiode, ausgebildet ist.

Weitere Vorteile ergeben sich, wenn zumindest ein, insbesondere jedes Sensorpixel als eine Mehrzahl, vorzugsweise mehr als zwei, insbesondere vier, matrixförmig angeordneter photoelektrische Wandlerelemente, insbesondere Photodioden, ausgebildet ist, wobei die photoelektrischen Wandlerelemente des zumindest einen Sensorpixels gebinnt sind und/oder zumindest einen gemeinsamen Floating-Diffusions-Bereich aufweisen.

Eine besonders günstige Variante ergibt sich, wenn mehrere Sensorpixel in Form eines in CMOS Technologie gefertigten "Active Pixel Sensors" (APS-CMOS) gruppiert sind, wobei hier einige Peripherischaltungen für die Funktion der Photodiode (A/D-Wandlung, Taktung der Auslesung, Verstärkung) direkt am gleichen Halbleiterbauteil umgesetzt sind.

Bei einer besonders günstigen Variante kann vorgesehen sein, dass ein, insbesondere jedes Leuchtpixel als zumindest eine LED-Lichtquelle ausgebildet ist.

Bei einer weiteren Variante kann vorgesehen sein, dass einzelne Leuchtpixel Teil einer segmentiert ausgeführten monolithischen LED Lichtquelle (ein Halbleiterbauteil mit 100-10.000 getrennt ansteuerbaren Leuchtpixel) sind.

Darüber hinaus kann vorgesehen sein, dass zumindest ein vorzugsweise jedes Leuchtpixel als zumindest ein Spiegel eines Spiegel-Arrays eines Flächenlichtmodulators, beispielsweise eines DMD-Chips, ausgebildet ist. Eine Kombination der LED-Lichtquellen und eines Flächenlichtmodulators ist durchaus denkbar.

Verschiedene Fehler beim Ausblenden der Bereiche der segmentierten Lichtverteilung können weiter reduziert werden, wenn die Beleuchtungsvorrichtung ferner eine Laserlichtquelle, beispielsweise eine Infrarot-Laserlichtquelle umfasst, wobei die Laserlichtquelle vorzugsweise auf dem Grundträger angeordnet ist und insbesondere als Senderkomponente zu einer Distanzmessung in Verbindung mit oben genannten Photodioden (Sensorpixel) als Empfängerteil eines LIDAR Sensors eingerichtet ist.

Eine besonders schnell funktionierende Beleuchtungsvorrichtung kann erzielt werden, wenn die Steuereinheit aus genau einem Mikrocontroller besteht, der eingerichtet ist, sowohl den Lichtsensor als auch das Leuchtmittel zu steuern.

Darüber hinaus ist es denkbar, dass die Steuereinheit mindestens zwei, vorzugsweise genau zwei Mikrocontroller umfasst, die miteinander zur Kommunikation verbunden sind, wobei vorzugsweise ein erster Mikrocontroller eingerichtet ist, den Lichtsensor zu steuern und vorzugsweise ein zweiter Mikrocontroller dazu eingerichtet ist, das Leuchtmittel zu steuern.

Dabei kann es vorteilhaft sein, wenn zumindest einer dieser Microcontroller unmittelbar mit dem photoaktiven Sensorelement verbunden, z.B. direkt hinter diesem im selben Elektronikbauteilgehäuse ("Chip-package") platziert, ist und sensorbezogene Datenvorverarbeitung ausführt. Diese Vorverarbeitung umfasst beispielsweise den Vergleich von Messwerten zwischen Pixeln untereinander und mit hinterlegten Werten bzw. die Auswahl und Ansteuerung von hinterlegten Auswertecharakteristiken (Ausleserate, Belichtungszeiten, Verstärkung..).

Die Erfindung samt weiteren Vorteilen ist im Folgenden an Hand beispielhafter Ausführungsformen näher erläutert, die in der Zeichnung veranschaulicht sind. In dieser zeigt
Fig. 1 ein beispielhaftes Lichtmodul in perspektivischer Ansicht;
Fig. 2 eine Vorderansicht des Lichtmoduls aus Fig. 1, und
Fig. 3 eine Vorderansicht des Lichtmoduls mit einer zweiteiligen Leiterplatte.

Die Figuren sind schematische Darstellungen, die lediglich jene Bestandteile zeigen, die für eine Erklärung der Erfindung hilfreich sein können. Der Fachmann erkennt sofort, dass die Beleuchtungsvorrichtung für einen Kraftfahrzeugscheinwerfer eine Vielzahl weiterer, hier nicht gezeigter Bestandteile aufweisen kann, wie Ein- und Verstelleinrichtungen, elektrische Versorgungsmittel und vieles mehr.

Zur Vereinfachung der Lesbarkeit und da, wo es zweckdienlich ist, sind die Figuren mit Bezugsachsen versehen. Diese Bezugsachsen beziehen sich auf eine fachgerechte Einbaulage der Beleuchtungsvorrichtung in einem Kraftfahrzeug und stellen ein kraftfahrzeugbezogenes Koordinatensystem dar.

Darüber hinaus soll es klar sein, dass richtungsbezogene Begriffe, wie "horizontal", "vertikal", "oben", "unten" etc. im Zusammenhang mit der vorliegenden Erfindung in einer relativen Bedeutung zu verstehen sind und sich entweder auf die vorgenannte fachgerechte Einbaulage oder auf eine fachübliche Ausrichtung einer abgestrahlten Lichtverteilung im Lichtbild beziehungsweise im Verkehrsraum beziehen.

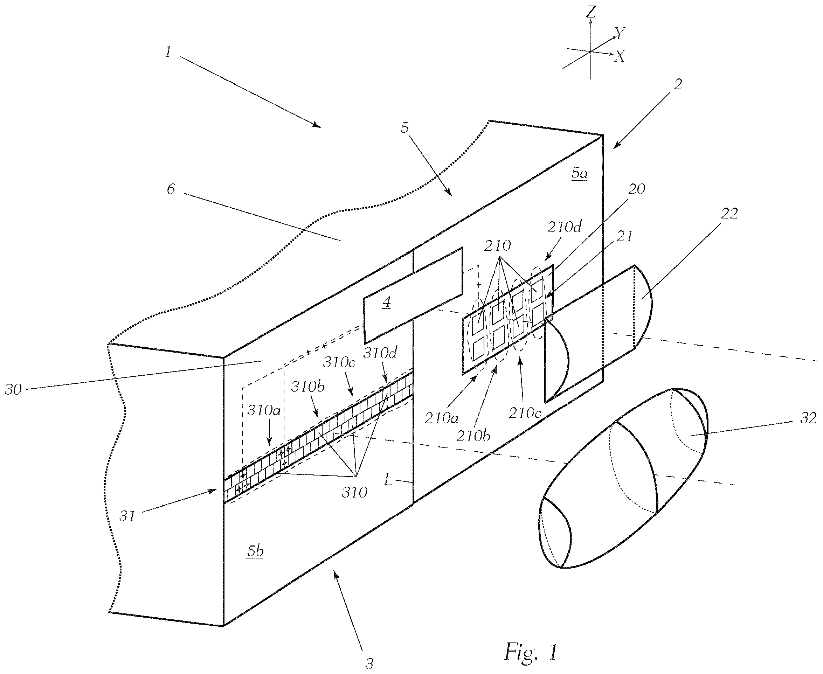

Zunächst wird auf **Figur 1** Bezug genommen. Diese zeigt ein Lichtmodul **1,** das der erfindungsgemäßen Beleuchtungsvorrichtung entspricht. Mit dem Begriff Lichtmodul soll zum Ausdruck gebracht werden, dass die erfindungsgemäße Beleuchtungsvorrichtung vorzugsweise als eine Baueinheit ausgebildet ist.

Das Lichtmodul umfassend umfasst eine Lichterzeugungseinheit **2,** die ein Leuchtmittel **20** und eine Projektionsoptik **22** aufweisen kann. Das Leuchtmittel **20** umfasst mehrere in einer matrixartigen Anordnung **21** angeordnete Leuchtpixel **210.** Diese Anordnung wird oft als Leuchtpixel-Array genannt. Die in **Figur 1** gezeigten Leuchtpixel **210** sind als LED-Lichtquellen mit einer rechteckigen, beispielsweise quadratischen Lichtemissionsfläche ausgebildet. Das Leuchtpixel-Array **21** kann aus zwei Zeilen und vier Spalten bestehen. Die Lichterzeugungseinheit **2** ist dazu eingerichtet, eine segmentierte Lichtverteilung zu erzeugen. Dabei ist jedes Leuchtpixel **210** zum Erzeugen zumindest eines Segments der segmentierten Lichtverteilung eingerichtet. Das heißt, wenn ein Leuchtpixel an ist, wird dieses leuchtende Pixel beispielsweise mittels einer Vorsatzoptik **22** als ein Segment der Lichtverteilung vor das Lichtmodul 1 abgebildet. Im einfachsten Fall ist die Vorsatzoptik **22** als ein vorzugsweise einstückiger Optikkörper ausgebildet, wie z.B. eine Linse - eine Freiformlinse, eine bikonvexe oder plankonvexe Linse o.ä. Mehrere Vorsatzoptiken und sogar kompliziertere Abbildungssysteme sind ebenfalls denkbar und können je nach dem konkreten Einsatz des Lichtmoduls **1** möglich und für eine optimale Abgrenzung von Segmenten nötig sein. Eine einzige Vorsatzoptik **22** hat zum Vorteil, dass das Lichtmodul **1** kompakt und einfach in seinem Aufbau ist. Darüber hinaus wird durch eine minimale Anzahl an optischen Bauelementen die Toleranzen bezüglich der optischen Bauelemente gering gehalten.

Vorzugsweise werden mit unterschiedlichen Leuchtpixeln **210** unterschiedliche Segmente erzeugt. Es versteht sich, dass jedes Leuchtpixel **210** oder **2100** mehrere unterschiedliche Helligkeitszustände haben kann. Z.B. kann ein Leuchtpixel in einen "AUS-Zustand" gebracht werden - das Leuchtpixel leuchtet nicht. Bei dimmbaren Leuchtpixeln kann ihre Helligkeit mehrere Werte zwischen 0 (AUS-Zustand) und einem maximalen Wert - "AN-Zustand" annehmen. Dabei kann es vorteilhaft sein, das Dimmen durch Puls-Weiten-Modulation (PWM), z.B. mit einer Frequenz von 200 Hz durchzuführen.

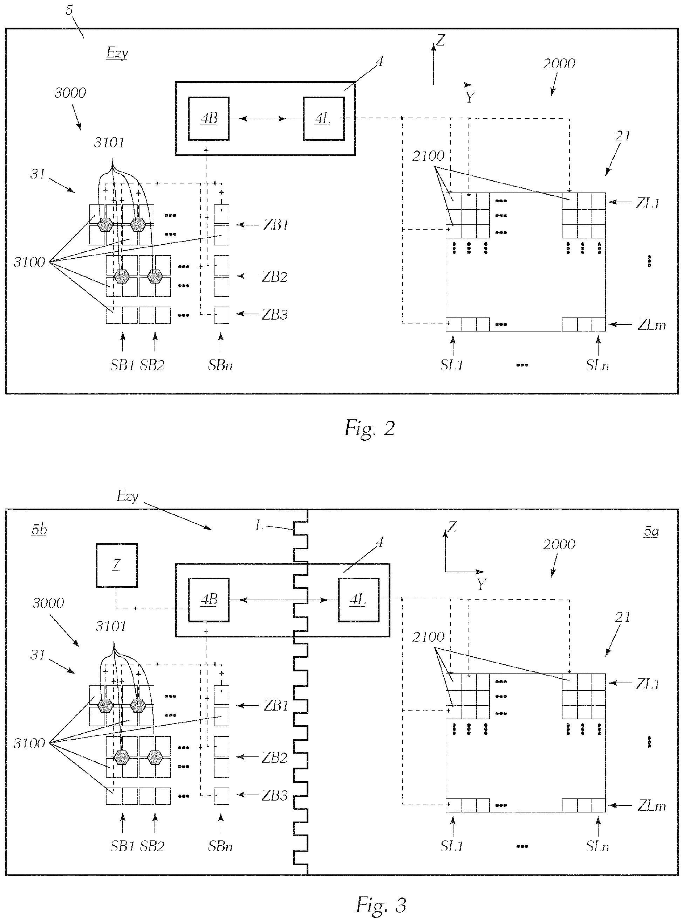

Darüber hinaus umfasst das Lichtmodul 1 eine Lichtsensorvorrichtung **3,** die einen Lichtsensor **30,** z.B. ein CMOS-Sensor, und vorzugsweise eine dem Lichtsensor vorgelagerte Sammeloptik **32** aufweist, welche abgestimmt auf den Leuchtbereich des Lichtmoduls den relevanten Messbereich am Sensor umfassend und präzise abbildet. Der Lichtsensor **30** ist als mehrere matrixartig angeordnete Sensorpixel **310** - Sensorpixel-Array **31 -** ausgebildet. Das Sensorpixel-Array **31** hat vorzugsweise nur wenige, insbesondere weniger als 35, z.B. zwei, drei, vier oder fünf Zeilen **ZB1, ZB2, ZB3** aber eine Vielzahl, vorzugsweise mehr als 1000, insbesondere 1024 oder 2048 von Sensorpixel-Spalten **SB1, SB2,** ... **SBn** (siehe auch **Figuren 2** und **3****).** Das Sensorpixel-Array **31** ist ein Quasi-Eindimensionales-Array. Die Sensorpixel-Zeilen sind **ZB1, ZB2, ZB3** vorzugsweise horizontal angeordnet. Jede Sensorpixel-Zeile **ZB1, ZB2, ZB3** besteht also vorzugsweise aus Sensorpixeln **310, 3100,** die nebeneinander in einer horizontalen Reihe angeordnet sind. Die bevorzugten CMOS-Sensoren sind: NSI1000, NSI3000, NSI3100, NSI3500, NSI5000, NSI5800, NSI3000EVB.

Im Gegensatz zu aus dem Stand der Technik bekannten ADB-Systemen bzw.- Lichtmodulen wird hier keine aufwendige CMOS- oder CCD-Kamera, sondern ein beispielsweise streifenförmiger Lichtsensor **30,** wie z.B. ein CMOS-Sensor verwendet. Verwendung von CCD-Sensoren ist ebenfalls möglich. Dies bedeutet, dass dem Lichtsensor **3** keine Bildauswertungseinheit zugeordnet ist, die aufgrund der von den in der Kamera befindlichen Sensoren aufgenommenen Daten eine Bildauswertung durchführt. Aufgrund der geringen Anzahl der Zeilen in dem Sensorpixel-Array **31** ist das Sichtfeld der Lichtsensorvorrichtung 3 in vertikaler Richtung Y beispielsweise auf einen Winkelbereich von bis zu +/-7, typischerweise +/-4 Grad ober- und unterhalb der optischen Achse eingeschränkt. Eine typische Aufnahme einer solchen Lichtsensorvorrichtung **3** hat die Form eines Streifens. Die Lichtsensorvorrichtung **3** ist vorzugsweise derart ausgerichtet, dass sie die Frontscheinwerfer entgegenkommender Kraftfahrzeuge und/oder die Schlussleuchten vorausfahrender Kraftfahrzeuge erfassen kann.

Vorzugsweise werden Sensorpixel mit einer sehr hohen (< 40 KHz) Ausleserate verwendet. Mit einer solchen Ausleserate ist es möglich, die Grundfrequenz der vorgenannten PWM-Dimmung von externen, auffälligen Lichtquellen zu erkennen, und somit beispielsweise Fahrzeug LED Leuchten (>200 bis 400 Hz) von Straßenbeleuchtung (50 Hz Frequenz) zu unterscheiden und einzuordnen. Gleichzeitig bietet eine hohe potentielle Ausleserate des Sensors die Möglichkeit, die Sensitivität dessen bei gleichzeitig hohem Dynamikbereich durch z.B.: mehrfache, variante Belichtungsdurchgänge oder Koppelung von Pixeln optimal zu gestalten.

Statt einer Bildauswertungseinheit o.ä. ist der Lichtsensorvorrichtung **3** eine Steuereinheit **4** zugeordnet, die keine aufwendige Bildauswertungssoftware umfasst und somit keine Bildauswertung (im üblichen Sinne) durchführen kann. D.h. unter anderem, dass die Steuereinheit **4** keine Objekterkennung durchführt. Beispielsweise kann die Steuereinheit **4** als ein einziger Mikrocontroller ausgebildet sein, der dazu eingerichtet ist, die Leuchtpixel **210** der Lichterzeugungseinheit **2** zu steuern und dabei ihre Helligkeit zu variieren (siehe oben). Der Lichtsensor **3** ist mit der Steuereinheit **4** zum Übertragen von aufgenommenen Daten verbunden. Im einfachsten Fall, sendet jedes Sensorpixel **310,** beispielsweise nach Chip-naher Vorverarbeitung in einer Sensorausleseeinheit, ein Signal an die Steuereinheit **4,** wenn die Intensität des detektierten Lichtes einen bestimmten Schwellenwert übersteigt. Vorzugsweise ist dieser Schwellenwert so gewählt, dass Licht von externen Lichtquellen, wie z.B. von Kraftfahrzeugscheinwerfern entgegenkommender Fahrzeuge oder von Rückleuchten vorausfahrender Fahrzeuge, detektiert aber Lichtreflexionen von Objekten, die sich außerhalb der Beleuchtungsvorrichtung befinden und von dieser beleuchtet werden, in dem Sinne nicht detektiert werden, dass sie zwar gemessen, aber nicht als relevante externe Lichtquelle bewertet werden. In Reaktion auf die vorgenannten, vorzugsweise binären Signale, die die Steuereinheit **4,** beispielsweise der Mikrocontroller, von der Lichtsensorvorrichtung **3** erhält, reduziert oder erhöht die Steuereinheit **4** die Helligkeit bzw. den Lichtstrom der entsprechenden Leuchtpixel **210** des Leuchtmittels **20.** Bei einer bevorzugten Ausführungsform schaltet die Steuereinheit 4 die entsprechenden Leuchtpixel **210** aus beziehungsweise ein, d.h. reduziert die Helligkeit bzw. den Lichtstrom auf 0 beziehungsweise erhöht diese/ diesen auf ein Maximum bzw. einen anderwärtig vorgegebenen Basiswert. Die Korrespondenz zwischen den Leucht- und Sensorpixeln wird nachstehend erörtert.

**Figur 1** lässt erkennen, dass sowohl der Lichtsensor **30** als auch das Leuchtmittel **20** gemeinsam in einer Ebene **Ezy** angeordnet sind, wobei die Ebene Ezy vorzugsweise im Wesentlichen senkrecht zu einer Hauptabstrahlrichtung **X** des Lichtmoduls angeordnet ist. Dabei ergibt sich ein besonders günstiges System, bei dem der Abgleich der Koordinatensysteme der Lichterzeugungseinheit **2** und der Lichtsensorvorrichtung **3** zumindest sehr vereinfacht, beispielsweise nur Korrektur eines sehr kleinen seitlichen Versatzes des Bezugspunkts und keine Notwendigkeit der Korrektur einer Verkippung der optischen Achse von Licht- und Sensorpixel, bzw. gar nicht mehr notwendig ist.

Das Lichtmodul **1** umfasst auch einen Grundträger **5,** wobei die Lichterzeugungseinheit **2,** die Lichtsensorvorrichtung **3** und die Steuereinheit **4** gemeinsam auf dem Grundträger **5** angeordnet, vorzugsweise auf dem Grundträger **5** befestigt sind und somit gemeinsam mit dem Grundträger **5** eine Baueinheit **6** bilden.

Beispielsweise kann der Grundträger **5** entweder monolithisch gefertigt sein oder aber auch aus (zumindest) zwei adäquat gefügten Einheiten bestehen, die die Bildung einer gemeinsamen Referenzebene **Ezy** gewährleisten.

Beispielsweise kann der Grundträger **5** als ein Kühlkörper mit einer daran befestigten Platine ausgebildet sein, wobei an der Patine der Lichtsensor **30,** der z.B. als eine CMOS-Chip ausgebildet ist, und das Leuchtmittel **20** mit der dazugehörigen Elektronik angebracht sein können. Die Platine kann einstückig **(****Figur 2****)** oder zweiteilig **(****Figuren 1** und **3****)** ausgebildet sein. Die Steuereinheit **4** kann ebenfalls an der Platine angeordnet sein.

Die Platine kann also eine erste Leiterplatte **5a** und eine zweite Leiterplatte **5b** umfassen, wobei das Leuchtmittel **20, 2000** auf der ersten Leiterplatte **5a** angebracht sein kann und der Lichtsensor **30, 3000** auf der zweiten Leiterplatte **5b** angebracht sein kann, wobei die erste Leiterplatte **5a** mit der zweiten Leiterplatte **5b** elektrisch (zum Übertragen von Signalen) und mechanisch - z.B. entlang einer (Grenz-)Linie **L** - verbunden ist.

Es ist außerdem denkbar, dass der Grundträger **5** auch einen ersten und einen zweiten Kühlkörper aufweist, wobei die Kühlkörper zueinander passen und miteinander mechanisch derartig verbunden ausgeführt sind, sodass beispielsweise eine gegenseitige Wärmeabfuhr möglich ist. Insbesondere können die Kühlkörper derart miteinander verbunden sein, dass der Lichtsensor **30, 3000** und das Leuchtmittel **20, 2000** in der gemeinsamen Ebene **Ezy** liegen.

Es ist denkbar dass die Lichterzeugungseinheit auf einer ersten Leiterplatte sitzt, die auf dem ersten Kühlkörper angeordnet sind und die Lichtsensorvorrichtung auf einer zweiten Leiterplatte sitzt, die auf dem zweiten Kühlkörper angeordnet ist.

Es ist innerhalb der Ebene **Ezy** jedenfalls zweckmäßig, dass die Lichterzeugungseinheit und die Lichtsensorvorrichtung seitlich nebeneinander oder aber auch über/untereinander, also seitlich versetzt zur Hauptabstrahlrichtung, jedenfalls jedoch zentriert auf einander ausgerichtet, angeordnet sind.

Die Leuchtpixel **210, 2100** des Leuchtpixel-Arrays **21** können in zumindest zwei Leuchtpixel-Gruppen, in dem gezeigten Beispiel in vier Leuchtpixel-Gruppen **210a, 210b, 210c, 210d** unterteilt sein, wobei jeweils eine Leuchtpixel-Gruppe **210a, 201b, 210c, 210d** ein Segment der segmentierten Lichtverteilung in einem Leucht-Raumwinkel erzeugen kann.

Die Sensorpixel 310, 3100 des Sensorpixel-Arrays 31 können in zumindest zwei Sensorpixel-Gruppen, in dem gezeigten Beispiel in vier Sensorpixel-Gruppen 310a, 310b, 310c, 310d unterteilt sein, wobei jeweils eine Sensorpixel-Gruppe 310a, 310b, 310c, 310d Licht in einem der Sensorpixel-Gruppe 310a, 310b, 310c, 310d zugeordneten Detektions-Raumwinkel detektieren kann und jeweils einer Leuchtpixel-Gruppe 210a, 210b, 210c, 210d zugeordnet ist, wobei das auf jede Sensorpixel-Gruppe 310a, 310b, 310c, 310d einfallende Licht als der jeweiligen Sensorpixel-Gruppe 310a, 310b, 310c, 310d zugeordneten Lichtstromwert erfassbar ist. Hierbei ist der von einer Sensorpixel-Gruppe 310a, 310b, 310c, 310d detektierbare Detektions-Raumwinkel ident ist mit dem Leucht-Raumwinkel der zugeordneten Leuchtpixel-Gruppe 210a, 210b, 210c, 210d.

Es kann auch vorgesehen sein, dass ein Leuchtpixel einer Leuchtpixel-Gruppe und ein Sensorpixel einer Sensorpixel-Gruppe entspricht.

**Figuren** 2 und 3 zeigen eine Lichterzeugungseinheit 2, bei der das Leuchtmittel 2000 ein Leuchtpixel-Array **21** mit m, vorzugsweise horizontal angeordneten Zeilen **ZL1,** ..., **ZLm** und n Spalten **SL1,** ..., **SLn** aufweist, wobei m > 2 und n > 4 ist. Es versteht sich, dass ein solches Leuchtmittel **2000** ohne weiteres statt dem Leuchtmittel **20** bei dem Lichtmodul 1 der **Figur 1** verwendet werden kann. Ein solches Leuchtpixel-Array **21** kann beispielsweise mit einem Flächenlichtmodulator - einer Art von Mikrospiegelaktoren - realisiert werden. Ein solcher Flächenlichtmodulator, wie z.B. ein DMD (engl. Digital Micromirror Device) oder ein Flächenlichtmodulator des Fraunhofer-Instituts für Photonische Mikrosysteme, hat mindestens mehrere hunderte für gewöhnlich aber mehrere tausende bis einige Millionen von individuell adressierbaren (Einzel-)Mikrospiegeln. Die Größe der einzelnen Mikrospiegeln liegt dabei im Mikrometerbereich (z.B. 10 µm oder mehr). Nichteinschränkende Beispiele sind: Arrays mit 256x256 Spiegeln in Größe 16x16 µm²; 512x2048 Spiegeln in Größe 16x16 µm²; 1024x2048 Spiegeln in Größe 10x10 µm², oder 240×200 Spiegeln 40×40 µm². Es ist also durchaus denkbar, dass jedes Leuchtpixel **2100** als ein, vorzugsweise genau ein Einzelmikrospiegel ausgebildet ist. Somit ist die Anzahl der Leuchtpixel **2100** bei einem solchen Leuchtmittel **2000** sehr groß, sodass der Bereich der segmentierten Lichtverteilung bzw. dem Leucht-Raumwinkel, der von einem einzelnen Sensorpixel **310** erfasst werden kann, zumindest ein Segment oft aber mehrere Segmente bzw. einem Leucht-Raumwinkel eines Segmentes der Lichtverteilung umfassen kann.

Mit anderen Worten bedeutet dies, dass die Sensorpixel-Gruppe **310a, 310b, 310c, 310d** aus demselben Raumwinkel (im Objektraum) Licht empfangen kann, in dem die korrespondierende Leuchtpixel-Gruppe **210a, 210b, 210c, 210d** Licht erzeugen kann. Von den Objekten, die außerhalb dieses Raumwinkels liegen, kann die Sensorpixel-Gruppe **310a, 310b, 310c, 310d** kein Licht empfangen. Die korrespondierende Leuchtpixel-Gruppe **210a, 210b, 210c, 210d** kann solche Objekte auch nicht beleuchten.

Dabei gibt jede Sensorpixel-Gruppe **310a, 310b, 310c, 310d** in einem Detektionszustand ein Signal aus, das einen Lichtstromwert des detektierten Lichts anzeigt beziehungsweise enthält.

Im Zusammenhang mit der vorliegenden Erfindung wird unter dem Begriff "Detektionszustand" ein Zustand verstanden, in dem die Sensorpixel **310, 3100** einer Sensorpixel-Gruppe **310a, 310b, 310c, 310d** ihren jeweiligen Detektions-Raumwinkel erfassen und in diesem Teil Licht detektieren, dessen Intensität einen vorbestimmten Schwellenwert übersteigen. Dabei wird der Schwellenwert so gewählt, dass externe Lichtquellen aber nicht Lichtreflexionen von Objekten, die sich außerhalb der Beleuchtungsvorrichtung befinden und von dieser beleuchtet werden, detektiert werden.

Es versteht sich, dass die segmentierte Lichtverteilung nicht komplett ausgeleuchtet sein muss, sondern auch dunkle Bereiche umfassen kann, die durch ausschalten von bestimmten Teilen des Leuchtmittel erzeugt werden können.

Wie bereits kurz erwähnt, ist die Steuereinheit 4 eingerichtet, die von den jeweiligen Sensorpixel-Gruppen **310a, 310b, 310c, 310d** detektierten Lichtstromwerte einzeln mit einem jeweils festlegbaren Schwellwert zu vergleichen, wobei die Steuereinheit **4** bei einem Überschreiten des Schwellenwerts den Lichtstrom der entsprechenden Leuchtpixel-Gruppe **210a, 210b, 210c, 210d** ändert, wie z.B. zu reduzieren, insbesondere auf 0 zu reduzieren, oder zu erhöhen, insbesondere auf Maximum zu erhöhen. Das bewirkt, dass z.B. jene Bereiche der Lichtverteilung abgeblendet werden können, in denen sich externe Lichtquellen befinden, ohne dass die Steuereinheit **4** eine aufwendige Bildauswertung durchführt. Dadurch werden die Latenzzeiten und die Anzahl der Fehlerquellen bei mindestens gleichbleibendem und meistens effizienteren Einsatz des Lichtmoduls reduziert. Im einfachsten Fall, werden die Leuchtpixel **210** beziehungsweise Leuchtpixel-Gruppen **210a, 210b, 210c, 210d** in Reaktion auf Lichtintensitätswerte ein- beziehungsweise ausgeschaltet.

Zumindest eines der Sensorpixel **310, 3100** und insbesondere alle Sensorpixel **310, 3100** können als zumindest ein photoelektrisches Wandlerelement beziehungsweise zumindest ein photoelektrischer Wandler, insbesondere als zumindest eine Photodiode ausgebildet sein. Bevorzugt jedoch in der Form eines APS-CMOS Sensors.

Es ist aber auch denkbar, dass zumindest ein, insbesondere jedes Sensorpixel **3100** als eine Mehrzahl, vorzugsweise mehr als zwei, insbesondere vier, matrixförmig angeordneter photoelektrische Wandlerelemente, insbesondere Photodioden, ausgebildet ist. **Figuren 2** und 3 lassen erkennen, dass jedes Sensorpixel **3100** als eine 2x2-Matrix-Anordnung von Wandlerelementen ausgebildet sein kann. Dabei können die photoelektrischen Wandlerelemente des zumindest einen Sensorpixels **3100** gebinnt sein und/oder zumindest einen gemeinsamen Floating-Diffusions-Bereich **3101** aufweisen. Unter dem Begriff "Floating-Diffusions-Bereich" wird ein schwebender oder schwimmender Diffusionsbereich beziehungsweise ein schwebendes oder schwimmendes Diffusionsgebiet verstanden.

Darüber hinaus ist den **Figuren 2** und **3** zu entnehmen, dass die Steuereinheit 4 mindestens zwei Mikrocontroller **4B, 4L** umfasst, die miteinander zur Kommunikation verbunden sind. Dabei kann ein erster Mikrocontroller **4B** eingerichtet sein, den Lichtsensor **30, 3000** zu steuern und ein zweiter Mikrocontroller **4L** dazu eingerichtet sein, das Leuchtmittel **20, 2000** zu steuern. An dieser Stelle sei betont, dass keine der beiden Mikrocontrollern **4B** oder **4L** die vorgenannte Bildaufnahme oder -analyse durchführt. Die Mikrocontroller **4B** und **4L** sind vorzugsweise zumindest logisch direkt, z.B. über eine logische Pixel zu Pixel Zuordnung wie beschrieben verknüpft.

Ferner kann das Lichtmodul 1 eine Laserlichtquelle, insbesondere eine Infrarot-Laserlichtquelle umfassen, wobei die Laserlichtquelle zu einer Distanzmessung eingerichtet ist und vorzugsweise auf dem Grundträger **5** angeordnet beziehungsweise mit der Platine **5, 5a** oder **5b** elektromechanisch verbunden ist. Die Laserlichtquelle kann dabei in einem kontinuierlichen Modus (Dauerstrich- bzw. CW-Laser) oder in einem gepulsten Modus verwendet werden. Der Lichtsensor **30** ist dabei zusätzlich dazu eingerichtet, Licht, das durch die Laserlichtquelle erzeugt und von externen Objekten reflektiert wird, zu detektieren. Die Laserlichtquelle wird dabei durch die Steuereinheit 4 gesteuert, die anhand des durch den Lichtsensor **30** detektierten von einem oder mehreren externen Objekten reflektierten Laserlichts, eine Distanz zu diesem einen oder gleichzeitig mehreren Objekten bestimmen kann. Zur Bestimmung der Distanz kann beispielsweise Triangulation (z.B. bei CW-Lasern) oder Enhanced-Time-of-Flight-Methode (z.B. bei gepulsten Lasern) verwendet werden.

## Patentansprüche

1. Beleuchtungsvorrichtung (1) für einen Kraftfahrzeugscheinwerfer, welche Beleuchtungsvorrichtung (1) Folgendes umfasst:
- eine Lichterzeugungseinheit (2) mit einem Leuchtmittel (20, 2000), welches Leuchtmittel (20, 2000) mehrere Leuchtpixel (210, 2100) umfasst, welche in einem Leuchtpixel-Array (21) angeordnet sind, wobei die Lichterzeugungseinheit (2) eingerichtet ist, durch Abgabe eines Lichtstroms eine segmentierte Lichtverteilung in eine Hauptabstrahlrichtung (X) vor der Beleuchtungsvorrichtung (1) zu erzeugen,
- eine Lichtsensorvorrichtung (3) mit einem Lichtsensor (30, 3000), welcher Lichtsensor (30, 3000) mehrere Sensorpixel (310, 3100) aufweist, welche in einem Sensorpixel-Array (31) angeordnet sind, wobei die Lichtsensorvorrichtung (3) eingerichtet ist, Lichtstrom von auf den Lichtsensor (30, 3000) einfallendem Licht zu erfassen,
- eine Steuereinheit (4), welche mit der Lichterzeugungseinheit (2) und der Lichtsensorvorrichtung (3) verbunden ist und eingerichtet ist, die Lichterzeugungseinheit (2) zur Erzeugung der segmentierten Lichtverteilung anzusteuern,
wobei die Leuchtpixel (210, 2100) des Leuchtpixel-Arrays (21) in zumindest zwei Leuchtpixel-Gruppen (210a, 210b, 210c, 210d) unterteilt sind, wobei jeweils eine Leuchtpixel-Gruppe (210a, 201b, 210c, 210d) ermöglicht, ein Segment der segmentierten Lichtverteilung in einem Leucht-Raumwinkel zu erzeugen,
und wobei die Sensorpixel (310, 3100) des Sensorpixel-Arrays (31) in zumindest zwei Sensorpixel-Gruppen (310a, 310b, 310c, 310d) unterteilt sind, wobei jeweils eine Sensorpixel-Gruppe (310a, 310b, 310c, 310d) ermöglicht, Licht in einem der Sensorpixel-Gruppe (310a, 310b, 310c, 310d) zugeordneten Detektions-Raumwinkel zu detektieren und jeweils einer Leuchtpixel-Gruppe (210a, 210b, 210c, 210d) zugeordnet ist, wobei das auf jede Sensorpixel-Gruppe (310a, 310b, 310c, 310d) einfallende Licht als der jeweiligen Sensorpixel-Gruppe (310a, 310b, 310c, 310d) zugeordneten Lichtstromwert erfassbar ist,
wobei der von einer Sensorpixel-Gruppe (310a, 310b, 310c, 310d) detektierbare Detektions-Raumwinkel ident ist mit dem Leucht-Raumwinkel der zugeordneten Leuchtpixel-Gruppe (210a, 210b, 210c, 210d),
**dadurch gekennzeichnet, dass**
die Lichterzeugungseinheit (2), die Lichtsensorvorrichtung (3) und die Steuereinheit (4) gemeinsam auf einem Grundträger (5) angeordnet sind, und gemeinsam mit dem Grundträger (5) eine Baueinheit (6) bilden,
und wobei die Steuereinheit (4) eingerichtet ist, die von den jeweiligen Sensorpixel-Gruppen (310a, 310b, 310c, 310d) detektierten Lichtstromwerte einzeln mit einem jeweils festlegbaren Schwellwert zu vergleichen, wobei die Steuereinheit (4) bei einem Überschreiten des Schwellenwerts den Lichtstrom der entsprechenden Leuchtpixel-Gruppe (210a, 210b, 210c, 210d) reduziert, wobei
der Schwellenwert derart gewählt ist, dass Licht von externen Lichtquellen, wie z.B. von Kraftfahrzeugscheinwerfern entgegenkommender Fahrzeuge, detektiert wird und Lichtreflexionen von Objekten, die sich außerhalb der Beleuchtungsvorrichtung befinden und von dieser beleuchtet werden, nicht detektiert werden,
wobei der Grundträger (5) eine erste Leiterplatte (5a) und eine zweite Leiterplatte (5b) umfasst, wobei das Leuchtmittel (20, 2000) auf der ersten Leiterplatte (5a) angebracht ist und der Lichtsensor (30, 3000) auf der zweiten Leiterplatte (5b) angebracht ist, wobei die erste Leiterplatte (5a) mit der zweiten Leiterplatte (5b) elektrisch und mechanisch verbunden ist, und wobei
der Lichtsensor (30, 3000) und das Leuchtmittel (20, 2000) gemeinsam in einer Ebene (Ezy) angeordnet sind, wobei die Ebene (Ezy) vorzugsweise im Wesentlichen senkrecht zu einer Hauptabstrahlrichtung (X) der Kraftfahrzeugscheinwerferbeleuchtungsvorrichtung angeordnet ist.

2. Vorrichtung nach Anspruch 1, wobei das Sensorpixel-Array (31) zumindest eine, vorzugsweise mehrere, beispielsweise zwei, drei oder vier, Sensorpixel-Zeile(n) (ZB1, ZB2, ZB3) und eine Vielzahl, vorzugsweise mehr als 1024, insbesondere 2048 von Sensorpixel-Spalten (SB1, SB2, ... SBn) aufweist, wobei die Sensorpixel-Zeile(n) (ZB1, ZB2, ZB3) vorzugsweise horizontal angeordnet sind.

3. Vorrichtung nach Anspruch 1 oder 2, wobei das Leuchtpixel-Array (21) zumindest eine, vorzugsweise mehrere Leuchtpixel-Zeile(n) (ZL1, ..., ZLm) und eine Vielzahl von Leuchtpixel-Spalten (SL1, ..., SLn) aufweist, wobei die Leuchtpixel-Zeile(n) (ZL1, ..., ZLm) vorzugsweise horizontal angeordnet sind.

4. Vorrichtung nach einem der Ansprüche 1 bis 3, wobei der Grundträger (5) einen Kühlkörper aufweist, an dem der Lichtsensor (30, 3000), das Leuchtmittel (20, 2000) und die Steuereinheit (4) angeordnet sind.

5. Vorrichtung nach einem der Ansprüche 1 bis 4, wobei zumindest ein, insbesondere jedes Sensorpixel (310, 3100) als zumindest ein photoelektrisches Wandlerelement, insbesondere als zumindest eine Photodiode, ausgebildet ist, vorzugsweise als APS-CMOS Sensor ausgebildet ist.

6. Vorrichtung nach einem der Ansprüche 1 bis 5, wobei zumindest ein, insbesondere jedes Sensorpixel (310, 3100) als eine Mehrzahl, vorzugsweise mehr als zwei, insbesondere vier, matrixförmig angeordneter photoelektrische Wandlerelemente, insbesondere Photodioden, ausgebildet ist, wobei die photoelektrischen Wandlerelemente des zumindest einen Sensorpixels (310, 3100) gebinnt sind und/oder zumindest einen gemeinsamen Floating-Diffusions-Bereich (3101) aufweisen.

7. Vorrichtung nach einem der Ansprüche 1 bis 6, wobei ein Leuchtpixel (210, 2100) als zumindest eine LED-Lichtquelle ausgebildet ist.

8. Vorrichtung nach einem der Ansprüche 1 bis 7, wobei ein Leuchtpixel (210, 2100) als zumindest ein Spiegel eines Spiegel-Arrays eines Flächenlichtmodulators, beispielsweise eines DMD-Chips, ausgebildet ist.

9. Vorrichtung nach einem der Ansprüche 1 bis 8, ferner umfassend eine Laserlichtquelle (7), beispielsweise eine Infrarot-Laserlichtquelle, wobei die Laserlichtquelle (7) vorzugsweise auf dem Grundträger (5) angeordnet ist.

10. Vorrichtung nach einem der Ansprüche 1 bis 9, wobei die Steuereinheit (4) aus genau einem Mikrocontroller besteht, der eingerichtet ist, sowohl den Lichtsensor (30, 3000) als auch das Leuchtmittel (20, 2000) zu steuern, oder mindestens zwei Mikrocontroller (4B, 4L) umfasst, die miteinander zur Kommunikation verbunden sind, wobei vorzugsweise ein erster Mikrocontroller (4B) eingerichtet ist, den Lichtsensor (30, 3000) zu steuern und vorzugsweise ein zweiter Mikrocontroller (4L) dazu eingerichtet ist, das Leuchtmittel (20, 2000) zu steuern.

11. Kraftfahrzeugscheinwerfer mit mindestens einer Kraftfahrzeugscheinwerferbeleuchtungsvorrichtung nach einem der Ansprüche 1 bis 10.

## Claims

1. Lighting device (1) for a motor vehicle headlight, which lighting device (1) comprises
- a light generating unit (2) having a light source (20, 2000), which light source (20, 2000) comprises a plurality of light pixels (210, 2100) which are arranged in a light pixel array (21), the light generating unit (2) being set up to generate a segmented light distribution in a main emission direction (X) in front of the lighting device (1) by emitting a light flux,
- a light sensor device (3) having a light sensor (30, 3000), which light sensor (30, 3000) has a plurality of sensor pixels (310, 3100) which are arranged in a sensor pixel array (31), the light sensor device (3) being set up to detect luminous flux from light incident on the light sensor (30, 3000),
- a control unit (4) which is connected to the light generating unit (2) and the light sensor device (3) and is arranged to control the light generating unit (2) to generate the segmented light distribution,
wherein the light pixels (210, 2100) of the light pixel array (21) are divided into at least two light pixel groups (210a, 210b, 210c, 210d), wherein in each case one light pixel group (210a, 201b, 210c, 210d) makes it possible to generate a segment of the segmented light distribution at a light solid angle,
and wherein the sensor pixels (310, 3100) of the sensor pixel array (31) are divided into at least two sensor pixel groups (310a, 310b, 310c, 310d), wherein a respective sensor pixel group (310a, 310b, 310c, 310d) enables light to be detected at a detection solid angle assigned to the sensor pixel group (310a, 310b, 310c, 310d) and is assigned to a respective luminous pixel group (210a, 210b, 210c, 210d), wherein the light incident on each sensor pixel group (310a, 310b, 310c, 310d) can be detected at a detection solid angle assigned to the sensor pixel group (310a, 310b, 310c, 310d), 310d) and is assigned to a respective luminous pixel group (210a, 210b, 210c, 210d), wherein the light incident on each sensor pixel group (310a, 310b, 310c, 310d) can be detected as a luminous flux value assigned to the respective sensor pixel group (310a, 310b, 310c, 310d),
wherein the detection solid angle detectable by a sensor pixel group (310a, 310b, 310c, 310d) is identical to the luminous solid angle of the associated luminous pixel group (210a, 210b, 210c, 210d),
**characterized in that**
the light generating unit (2), the light sensor device (3) and the control unit (4) are arranged together on a base carrier (5) and together with the base carrier (5) form a structural unit (6), and wherein the control unit (4) is set up to compare the luminous flux values detected by the respective sensor pixel groups (310a, 310b, 310c, 310d) individually with a respectively determinable threshold value, wherein the control unit (4) reduces the luminous flux of the corresponding luminous pixel group (210a, 210b, 210c, 210d) when the threshold value is exceeded, wherein
the threshold value is selected in such a way that light from external light sources, such as motor vehicle headlights of oncoming vehicles, is detected and light reflections from objects which are located outside the lighting device and are illuminated by the latter are not detected,
wherein the base carrier (5) comprises a first printed circuit board (5a) and a second printed circuit board (5b), wherein the illuminant (20, 2000) is mounted on the first printed circuit board (5a) and the light sensor (30, 3000) is mounted on the second printed circuit board (5b), wherein the first printed circuit board (5a) is electrically and mechanically connected to the second printed circuit board (5b), and wherein
the light sensor (30, 3000) and the illuminant (20, 2000) are arranged together in a plane (Ezy), wherein the plane (Ezy) is preferably arranged substantially perpendicular to a main radiation direction (X) of the motor vehicle headlamp lighting device.

2. Device according to claim 1, wherein the sensor pixel array (31) comprises at least one, preferably several, for example two, three or four, sensor pixel row(s) (ZB1, ZB2, ZB3) and a plurality, preferably more than 1024, in particular 2048, of sensor pixel columns (SB1, SB2, ... SBn), wherein the sensor pixel row(s) (ZB1, ZB2, ZB3) are preferably arranged horizontally.

3. Device according to claim 1 or 2, wherein the light pixel array (21) comprises at least one, preferably a plurality of light pixel row(s) (ZL1, ..., ZLm) and a plurality of light pixel columns (SL1, ..., SLn), wherein the light pixel row(s) (ZL1, ..., ZLm) are preferably arranged horizontally.

4. Device according to one of claims 1 to 3, wherein the base carrier (5) has a heat sink on which the light sensor (30, 3000), the illuminant (20, 2000) and the control unit (4) are arranged.

5. Device according to one of claims 1 to 4, wherein at least one, in particular each sensor pixel (310, 3100) is designed as at least one photoelectric converter element, in particular as at least one photodiode, preferably designed as an APS-CMOS sensor.

6. Device according to one of claims 1 to 5, wherein at least one, in particular each sensor pixel (310, 3100) is designed as a plurality, preferably more than two, in particular four, photoelectric converter elements, in particular photodiodes, arranged in a matrix, wherein the photoelectric converter elements of the at least one sensor pixel (310, 3100) are tinned and/or have at least one common floating diffusion region (3101).

7. Device according to any one of claims 1 to 6, wherein a light pixel (210, 2100) is formed as at least one LED light source.

8. Device according to any one of claims 1 to 7, wherein a light pixel (210, 2100) is formed as at least one mirror of a mirror array of an area light modulator, for example a DMD chip.

9. Device according to one of claims 1 to 8, further comprising a laser light source (7), for example an infrared laser light source, wherein the laser light source (7) is preferably arranged on the base carrier (5).

10. Device according to one of claims 1 to 9, wherein the control unit (4) consists of exactly one microcontroller which is set up to control both the light sensor (30, 3000) and the illuminant (20, 2000), or comprises at least two microcontrollers (4B, 4L) which are connected to each other for communication, wherein preferably a first microcontroller (4B) is set up to control the light sensor (30, 3000) and preferably a second microcontroller (4L) is set up to control the illuminant (20, 2000).

11. Motor vehicle headlamp comprising at least one motor vehicle headlamp lighting device according to any one of claims 1 to 10.

## Revendications

1. Dispositif d'éclairage (1) pour un projecteur de véhicule automobile, lequel dispositif d'éclairage (1) comprend ce qui suit :
- une unité de génération de lumière (2) avec un moyen d'éclairage (20, 2000), lequel moyen d'éclairage (20, 2000) comprend plusieurs pixels lumineux (210, 2100) qui sont disposés dans un réseau de pixels lumineux (21), l'unité de génération de lumière (2) étant conçue pour générer, par l'émission d'un flux lumineux, une répartition de lumière segmentée dans une direction de rayonnement principale (X) devant le dispositif d'éclairage (1),
- un dispositif capteur de lumière (3) avec un capteur de lumière (30, 3000), lequel capteur de lumière (30, 3000) présente plusieurs pixels de capteur (310, 3100) qui sont disposés dans un réseau de pixels de capteur (31), le dispositif capteur de lumière (3) étant conçu pour détecter le flux lumineux de la lumière incidente sur le capteur de lumière (30, 3000),
- une unité de commande (4) qui est reliée à l'unité de génération de lumière (2) et au dispositif de capteur de lumière (3) et qui est conçue pour commander l'unité de génération de lumière (2) afin de générer la distribution de lumière segmentée,
les pixels lumineux (210, 2100) du réseau de pixels lumineux (21) étant divisés en au moins deux groupes de pixels lumineux (210a, 210b, 210c, 210d), un groupe de pixels lumineux (210a, 201b, 210c, 210d) permettant respectivement de générer un segment de la répartition segmentée de la lumière dans un angle solide lumineux,
et dans lequel les pixels de détection (310, 3100) du réseau de pixels de détection (31) sont divisés en au moins deux groupes de pixels de détection (310a, 310b, 310c, 310d), chaque groupe de pixels de détection (310a, 310b, 310c, 310d) permettant de détecter la lumière dans un angle de détection correspondant au groupe de pixels de détection (310a, 310b, 310c, 310d), 310d) et est associé respectivement à un groupe de pixels lumineux (210a, 210b, 210c, 210d), la lumière incidente sur chaque groupe de pixels de capteur (310a, 310b, 310c, 310d) pouvant être détectée comme valeur de flux lumineux associée au groupe de pixels de capteur respectif (310a, 310b, 310c, 310d),
l'angle solide de détection détectable par un groupe de pixels de capteur (310a, 310b, 310c, 310d) étant identique à l'angle solide d'éclairage du groupe de pixels d'éclairage associé (210a, 210b, 210c, 210d),
**caractérisé en ce que**
l'unité de génération de lumière (2), le dispositif de détection de lumière (3) et l'unité de commande (4) sont disposés ensemble sur un support de base (5), et forment ensemble avec le support de base (5) une unité de construction (6),
et l'unité de commande (4) étant conçue pour comparer individuellement les valeurs de flux lumineux détectées par les groupes de pixels de capteur respectifs (310a, 310b, 310c, 310d) avec une valeur seuil pouvant être fixée dans chaque cas, l'unité de commande (4) réduisant le flux lumineux du groupe de pixels lumineux correspondant (210a, 210b, 210c, 210d) en cas de dépassement de la valeur seuil, sachant que
la valeur seuil est choisie de telle sorte que la lumière provenant de sources lumineuses externes, telles que les phares de véhicules automobiles venant en sens inverse, soit détectée et que les réflexions lumineuses d'objets se trouvant à l'extérieur du dispositif d'éclairage et éclairés par celui-ci ne soient pas détectées,
le support de base (5) comprenant une première carte de circuit imprimé (5a) et une deuxième carte de circuit imprimé (5b), le moyen d'éclairage (20, 2000) étant monté sur la première carte de circuit imprimé (5a) et le capteur de lumière (30, 3000) étant monté sur la deuxième carte de circuit imprimé (5b), la première carte de circuit imprimé (5a) étant reliée électriquement et mécaniquement à la deuxième carte de circuit imprimé (5b), et dans lequel
le capteur de lumière (30, 3000) et la source lumineuse (20, 2000) sont disposés ensemble dans un plan (Ezy), ledit plan (Ezy) étant de préférence sensiblement perpendiculaire à une direction principale d'émission (X) du dispositif d'éclairage des phares du véhicule automobile.

2. Dispositif selon la revendication 1, dans lequel le réseau de pixels de détection (31) comprend au moins une, de préférence plusieurs, par exemple deux, trois ou quatre, ligne(s) de pixels de détection (ZB1, ZB2, ZB3) et une pluralité, de préférence plus de 1024, notamment 2048, de colonnes de pixels de détection (SB1, SB2, ... SBn), la ou les ligne(s) de pixels de détection (ZB1, ZB2, ZB3) étant de préférence disposées horizontalement.

3. Dispositif selon la revendication 1 ou 2, dans lequel le réseau de pixels lumineux (21) comprend au moins une, de préférence plusieurs, ligne(s) de pixels lumineux (ZL1, ..., ZLm) et une pluralité de colonnes de pixels lumineux (SL1, ..., SLn), la ou les ligne(s) de pixels lumineux (ZL1, ..., ZLm) étant de préférence disposées horizontalement.

4. Dispositif selon l'une des revendications 1 à 3, dans lequel le support de base (5) comporte un corps de refroidissement sur lequel sont disposés le capteur de lumière (30, 3000), le moyen d'éclairage (20, 2000) et l'unité de commande (4).

5. Dispositif selon l'une des revendications 1 à 4, dans lequel au moins un, en particulier chaque pixel de capteur (310, 3100) est conçu comme au moins un élément de conversion photoélectrique, en particulier comme au moins une photodiode, de préférence est conçu comme un capteur APS-CMOS.

6. Dispositif selon l'une des revendications 1 à 5, dans lequel au moins un, en particulier chaque pixel de capteur (310, 3100) est réalisé sous la forme d'une pluralité, de préférence plus de deux, en particulier quatre, éléments de conversion photoélectrique, en particulier photodiodes, disposés en forme de matrice, les éléments de conversion photoélectrique dudit au moins un pixel de capteur (310, 3100) étant liés et/ou présentant au moins une zone de diffusion flottante commune (3101).

7. Dispositif selon l'une des revendications 1 à 6, dans lequel un pixel lumineux (210, 2100) est réalisé sous la forme d'au moins une source lumineuse LED.

8. Dispositif selon l'une des revendications 1 à 7, dans lequel un pixel lumineux (210, 2100) est réalisé sous la forme d'au moins un miroir d'un réseau de miroirs d'un modulateur de lumière de surface, par exemple une puce DMD.

9. Dispositif selon l'une des revendications 1 à 8, comprenant en outre une source de lumière laser (7), par exemple une source de lumière laser infrarouge, la source de lumière laser (7) étant de préférence disposée sur le support de base (5).

10. Dispositif selon l'une des revendications 1 à 9, dans lequel l'unité de commande (4) est constituée d'exactement un microcontrôleur agencé pour commander à la fois le capteur de lumière (30, 3000) et le moyen d'éclairage (20, 2000), ou comprend au moins deux microcontrôleurs (4B, 4L) reliés entre eux pour communiquer, de préférence un premier microcontrôleur (4B) étant agencé pour commander le capteur de lumière (30, 3000) et de préférence un deuxième microcontrôleur (4L) étant agencé pour commander le moyen d'éclairage (20, 2000).

11. Projecteur de véhicule automobile comportant au moins un dispositif d'éclairage de projecteur de véhicule automobile selon l'une quelconque des revendications 1 à 10.
